# FASCICULE DE BREVET EUROPEEN

(11) **EP 4 433 759 B1**
(45) Date de publication et mention de la délivrance du brevet: **20.08.2025**
(21) Numéro de dépôt: 22800645.8
(22) Date de dépôt: 07.10.2022
(51) Int. Cl.: F25B 9/10, F25D 19/00, F17C 13/08, F17C 3/08

(54) **DISPOSITIF DE RÉFRIGÉRATION CRYOGÉNIQUE**
KRYOGENE KÜHLVORRICHTUNG
CRYOGENIC REFRIGERATION DEVICE

(30) Priorité: 17.11.2021 FR 2112151
(43) Date de publication de la demande: 25.09.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BOUVIER, Camille, 38360 Sassenage (FR); GAFFET, Luc, 38360 Sassenage (FR); GUIA, Olivier, 38360 Sassenage (FR)
(74) Mandataire: Air Liquide
(86) Numéro de dépôt international: PCT/EP2022/077914
(87) Numéro de publication internationale: WO 2023/088608

(56) Documents cités:
- EP-A1- 3 477 225
- US-A- 4 606 201
- US-A- 4 672 823

## Description

L'invention concerne un dispositif de réfrigération cryogénique.

L'invention concerne plus particulièrement un dispositif de réfrigération cryogénique, tel que défini dans la revendication 1, comprenant une enceinte délimitant un volume étanche sous vide refermé par un couvercle, le dispositif comprenant au moins un refroidisseur cryogénique monté au travers du couvercle et ayant une première extrémité située à l'extérieur de l'enceinte et une seconde extrémité située dans l'enceinte, le refroidisseur cryogénique étant configuré pour fournir du froid au niveau de sa seconde extrémité, le dispositif comprenant au moins deux plateaux conducteurs thermiques répartis selon une direction de répartition dans l'enceinte et formant des étages thermiques, au moins une partie des plateaux étant refroidie par le refroidisseur cryogénique à des températures déterminées respectives décroissantes dans la direction de répartition, au moins un des plateaux étant relié à un écran thermique formant un volume englobant au moins un plateau suivant, le refroidisseur cryogénique étant du type utilisant une source froide de fluide de cycle liquéfié tel que de l'hélium ou de l'azote.

L'invention concerne un dispositif de réfrigération permettant de refroidir des éléments à une température cryogénique inférieure à 100k et notamment inférieure à 50k et/ou inférieure à 4k.

En particulier, l'invention concerne les dispositifs de réfrigération qui permettent de refroidir à des températures très basses, de l'ordre du millikelvin (« réfrigération subKelvin »). Ces températures très basses sont classiquement obtenues via un réfrigérateur à dilution ou un refroidisseur cryogénique de type Joule Thomson à He4 ou à He3.

Dans ces dispositifs il est nécessaire d'apporter une puissance froide jusqu'à une température de par exemple 4K à un ou plusieurs étages de réfrigération.

Cette puissance froide doit pouvoir également refroidir rapidement le dispositif (mise en froid à partir d'un état chaud). Le dispositif doit pouvoir également être réchauffé en vue d'une maintenance par exemple.

Les réfrigérateurs à dilution connus ont besoin de puissances froides au moins jusqu'à 4.2K pour fonctionner. Cette puissance froide est classiquement obtenue à partir de réfrigérateurs cryogéniques de type à tubes à gaz pulsé ou équivalents dits « secs ». Selon une autre solution dite « humide », on utilise un bain d'hélium liquide dans l'enceinte pour refroidir les plateaux ou autre. Cette solution pose des problèmes de gestion de l'étanchéité entre des différentes parties qui complique l'accès pour les échantillons et câbles dans l'enceinte. Ces solutions « humides » connues nécessitent en outre des temps de mise en froid et réchauffage relativement importants.

Des applications (refroidissement de Qbits par exemple) nécessitent une augmentation de puissance froide nécessaire jusqu'à 4.2K environ. Les puissances froides des tubes à gaz pulsé sont limitées et peu adaptées. EP 3 477 225 A1 divulgue un dispositif de réfrigération cryogénique selon le préambule de la revendication 1.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que, au moins une partie des plateaux est refroidis par le fluide de cycle via un ensemble d'échangeurs thermiques en échange de chaleur avec lesdits plateaux et avec un flux du fluide de cycle.

Par ailleurs, des modes de réalisation de l'invention peuvent comporter l'une ou plusieurs des caractéristiques suivantes :
- l'ensemble d'échangeurs thermiques en échange de chaleur avec lesdits plateaux comprend plusieurs échangeurs thermiques distincts associés respectivement aux plateaux, les échangeurs d'au moins deux plateaux étant reliés mécaniquement les uns aux autres,
- lesdits échangeurs thermiques sont agencés et espacés selon la direction de répartition, la direction de répartition étant verticale en position de fonctionnement dans l'enceinte,
- lesdits échangeurs thermiques sont montés dans l'enceinte via un même passage dans le couvercle, par exemple via une même bride support du couvercle,
- les échangeurs thermiques comprennent un bloc de matériau conducteur thermique, par exemple en cuivre, en contact avec un tube de matériau conducteur thermique, par exemple en cuivre, transportant le flux de fluide de cycle, ledit tube étant brasé sur le bloc et/ou usiné dans le bloc et/ou moulé et/ou coulé dans le bloc,
- moins une partie des échangeurs thermiques sont montés sur les plateaux et en échange de chaleur avec lesdits plateaux par conduction et contact, via au moins l'un parmi : un boulonnage, au moins une tresse thermique de liaison, une pince,
- au moins une partie de l'ensemble d'échangeurs thermiques est disposé dans une gaine étanche délimitant un volume indépendant du reste du volume de l'enceinte,
- au moins une partie des échangeurs thermiques sont en échange de chaleur avec lesdits plateaux sans contact avec les plateaux mais via un gaz intermédiaire, par exemple un gaz contenant au moins l'un parmi : de l'hélium, de l'azote, de l'argon ou de l'hydrogène,
- au moins une partie des échangeurs thermiques comprend une couche de dorure configurée pour augmenter l'échange thermique,
- le refroidisseur cryogénique comprend un réfrigérateur à cycle de réfrigération d'un fluide de cycle, ledit réfrigérateur comprenant, un circuit de cycle composé des éléments suivants disposés en série: un mécanisme de compression du fluide de cycle, au moins un organe de refroidissement du fluide de cycle, un mécanisme de détente du fluide de cycle et au moins un organe de réchauffage du fluide de cycle détendu, dans lequel le fluide de cycle comprenant au moins l'un parmi : de l'hélium, de l'hydrogène, de l'azote de l'argon, le circuit de cycle étant configuré pour soumettre le fluide de cycle à un cycle thermodynamique amenant le fluide de cycle à au moins une extrémité du circuit de cycle à une température froide déterminée, le flux de fluide de cycle en échange thermique avec lesdits plateaux dans l'ensemble d'échangeurs thermiques comprenant le fluide de cycle à la température froide, le dispositif comprenant un ensemble de conduite(s) d'amenée d'au moins une partie du fluide du circuit de cycle vers l'ensemble d'échangeur et de retour dudit fluide de l'ensemble d'échangeur vers le circuit de cycle du réfrigérateur,
- le circuit de cycle est configuré pour soumettre le fluide de cycle à un cycle thermodynamique amenant le fluide de cycle à plusieurs températures froides distinctes au niveau respectivement de plusieurs extrémités du circuit de cycle, plusieurs flux distincts du fluide de cycle auxdites températures froides distinctes étant mis en échange thermique avec respectivement les aux moins deux plateaux distincts via deux ensembles d'échangeurs thermiques respectifs,
- le fluide de cycle est ou contient majoritairement de l'hélium, le circuit de cycle étant configuré pour amener le fluide de cycle à au moins une température froide parmi : 80K environ, entre 20 et 70K, entre 2K et5K et/ou dans un état supercritique,
- le refroidisseur cryogénique comprend une réserve de gaz cryogénique liquéfié, par exemple de l'azote liquide, et un ensemble de conduite(s) d'amenée de gaz cryogénique liquéfié de la réserve vers l'ensemble d'échangeur,
- le dispositif comprend un réfrigérateur à dilution en échange thermique avec au moins un plateau,
- les plateaux sont composés d'un matériau conducteur thermique, par exemple du cuivre ou tout autre alliage ou tout matériau approprié,
- les plateaux peuvent être espacés les uns des autres par des tiges à faible conductivité thermique,
- les plateaux sont configurés pour être le support pour divers appareils ou échantillons à refroidir à basse température,
- le dispositif comprend un ou des éléments d'isolation électrique assurant une isolation électrique entre l'enceinte et le refroidisseur.

L'invention concerne également un procédé de réfrigération cryogénique d'échantillon(s), tel que défini dans la revendication 15, utilisant un dispositif de réfrigération cryogénique selon l'une quelconque des caractéristiques ci-dessus ou ci-dessous, comprenant une étape de stockage et/ou de production d'une source froide de fluide de cycle liquéfié tel que de l'hélium ou de l'azote au niveau de la première extrémité du refroidisseur cryogénique, une étape de transfert d'un flux de ce fluide de cycle de la première extrémité vers la seconde extrémité du refroidisseur cryogénique, ledit flux de fluide de cycle étant mis en échange de chaleur avec l'ensemble d'échangeurs thermique au niveau de la seconde extrémité de façon étanche sans communiquer avec le volume gazeux interne de l'enceinte.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue en coupe verticale, schématique et partielle, illustrant un exemple de réalisation d'un dispositif de refroidissement selon l'invention,
[Fig. 2] représente une vue schématique et partielle illustrant un exemple de réalisation d'un refroidisseur cryogénique pouvant être utilisé dans un tel dispositif de refroidissement,
[Fig. 3] représente une vue en coupe verticale, schématique et partielle, illustrant un autre exemple de réalisation d'un dispositif de refroidissement selon l'invention.

Le dispositif 1 de réfrigération cryogénique illustré comprend une enceinte 2 délimitant un volume étanche sous vide refermé par un couvercle 3.

Le dispositif 1 comprend au moins un refroidisseur 4 cryogénique monté au travers du couvercle 3 et ayant une première extrémité située à l'extérieur de l'enceinte 2 et une seconde extrémité située dans l'enceinte 2.

Le refroidisseur 4 cryogénique est configuré pour fournir du froid au niveau de sa seconde extrémité. Par exemple, une ou la puissance froide est stockée et/ou produite au niveau de la première extrémité du refroidisseur cryogénique.

Les première et seconde extrémités du refroidisseur cryogénique peuvent former une seule entité physique. En variante ou en combinaison, la puissance froide pourrait être produite dans une autre installation/dispositif (autre entité physique) et transférée à cette première extrémité, par exemple par un fluide caloporteur ou tout autre organe de transfert thermique. Ainsi, la puissance froide (ou source froide) est produite ou stockée en dehors de l'enceinte 2.

Au moins une partie de cette puissance froide peut être transférée de la première extrémité vers la seconde extrémité.

Le refroidisseur 4 cryogénique est par exemple un réfrigérateur du type utilisant un fluide de cycle soumis à un cycle thermodynamique dans un circuit de cycle fermé (autre qu'un réfrigérateur à dilution). Ce fluide de cycle est amené à une température relativement plus froide au niveau d'une extrémité froide du cycle pour fournir une puissance froide. Au moins une partie du circuit de cycle peut être située à l'extérieur de l'enceinte 2, notamment l'extrémité froide. Ainsi, le fluide de cycle est refroidi à l'extérieur de l'enceinte 2 et peut être mis en circulation dans l'enceinte pour y fournir une puissance froide (au niveau d'au moins un plateau 5, 6, 10). La puissance froide est ainsi produite en dehors de l'enceinte 2. Le fluide de cycle réchauffé qui a échangé thermiquement avec les plateaux dans l'enceinte 2 peut retourner hors de l'enceinte pour être à nouveau refroidi (cycle qui recommence). En particulier les organes de compression, détente du cycle peuvent être situés à l'extérieur de l'enceinte 2.

Cette configuration limite le nombre de composants du réfrigérateur 4 cryogénique dans l'enceinte 2 sous vide qui comprend de préférence un réfrigérateur à dilution. Ceci permet de prévoir un vide très poussé dans l'enceinte 2 qui est favorable au réfrigérateur à dilution. Ceci limite le risque de fuite et augmente le temps de fonctionnement de la réfrigération à dilution.

Le dispositif 1 comprend dans cet exemple trois plateaux 5, 6, 10 conducteurs thermiques répartis verticalement dans l'enceinte 2 et formant des étages thermiques à des températures déterminées. Les plateaux sont configurés pour recevoir et refroidir des éléments ou échantillons.

Le dispositif 1 comprend de préférence un ensemble de passages 17 formés au travers du couvercle 3 et des plateaux 5, 6 pour le passage étanche de câble(s) et/ou d'appareillage(s) dans l'enceinte 2.

Au moins une partie des plateaux 5, 6 (deux dans cet exemple) sont refroidis par le refroidisseur 4 cryogénique à des températures déterminées respectives décroissantes du haut vers le bas (par exemple un premier plateau 5 peut être refroidi à une température comprise entre 20K et 80K, notamment autour de 50K, et l'autre plateau 6 peut être refroidi à une température comprise entre 2K et 5K, notamment autour de 4K).

L'invention n'est pas limitée à ce mode de réalisation et d'autres configurations pour les plateaux sont possibles. Par exemple, les plateaux pourraient être thermalisés à une température décroissante du bas vers le haut, ou encore ils pourraient être agencés selon une direction horizontale et être thermalisés à des températures décroissantes de la gauche vers la droite ou inversement ou selon une autre répartition.

Comme illustré, le ou les plateaux 5, 6 peuvent être reliés à un écran 19, 20 thermique formant un volume englobant au moins un plateau inférieur suivant.

C'est-à-dire que les écrans 19, 20 peuvent former des volumes qui sont contenus les uns dans les autres (volumes « gigognes »). Tout ou partie des écrans 19, 20 peuvent être refroidis par un refroidisseur 4 cryogénique par couplage thermique précité.

Selon une particularité avantageuse, le refroidisseur 4 cryogénique est du type utilisant une source froide de fluide de cycle liquéfié tel que de l'hélium de l'hydrogène ou de l'azote, au moins une partie des plateaux 5, 6, 10 étant refroidis par le gaz de cycle via un ensemble d'échangeurs thermiques en échange avec lesdits plateaux 5, 6 et avec un flux du fluide de cycle. C'est-à-dire que le refroidisseur cryogénique 4 est connecté à une source froide située à l'extérieur de l'enceinte 2, cette source froide fournissant un flux de fluide liquéfié, refroidi à l'extérieur de l'enceinte 2, ce flux circule dans le refroidisseur cryogénique 4 et est mis en échange thermique avec au moins une partie des plateaux 5, 6, 10 dans l'enceinte 2.

Le flux de fluide de cycle est amené dans l'enceinte via un circuit étanche de sorte que le fluide de cycle ne communique pas avec l'intérieur de l'enceinte 2 (contrairement aux solutions humides connues).

L'ensemble d'échangeurs thermiques en échange avec lesdits plateaux 5, 6 comprend par exemple plusieurs par exemple échangeurs thermiques distincts montés respectivement sur les plateaux 5, 6. De plus, les échangeurs d'au moins deux plateaux 5, 6 adjacents sont de préférence reliés mécaniquement (de façon à former une seule entité mécanique qui est introduite ou retirée de l'enceinte 2).

De préférence, ces éléments sont tenus ensemble par les conduites rigides pour le fluide de cycle et/ou via des supports supplémentaires en matériau isolant thermiquement comme de la fibre de verre, et/ou encore via un châssis. Ceci permet d'insérer et de retirer l'ensemble en une seule opération aisée. Les échangeurs thermiques sont par exemple agencés en ligne et espacés selon une direction de répartition, par exemple une direction d'empilement qui est verticale en position de fonctionnement dans l'enceinte 2.

Ces étages de refroidissement sont disposés l'un au-dessus de l'autre de façon espacée mais les échangeurs thermiques ne sont pas forcément alignés sur le même axe vertical comme représenté dans l'exemple non limitatif.

Les échangeurs thermiques peuvent être montés dans l'enceinte 2 via un même passage dans le couvercle 3, par exemple via une même bride 15 support du couvercle 3.

Au moins une partie de l'ensemble d'échangeurs thermiques peut être disposée dans une gaine 21 étanche délimitant par exemple un volume indépendant du reste du volume de l'enceinte 2, et qui peut contenir du gaz à une pression comprise entre quelques millibars et quelques bar, ou alors être mis au vide, c'est à dire à une pression inférieure à 0,01mbar.

Les échangeurs thermiques peuvent être en échange avec lesdits plateaux 5, 6 par conduction et contact direct ou indirect, par exemple via au moins l'un parmi : un boulonnage, au moins une tresse thermique de liaison, une pince...

Dans l'exemple non limitatif illustré, les échangeurs thermiques comprennent un bloc 7 de matériau conducteur, par exemple en cuivre, en contact avec le plateau 5, 6 et un tube 8, 18 ou circuit en matériau conducteur transportant le flux de fluide de cycle (par exemple en cuivre, aluminium ou autre).

Ce tube ou circuit peut être brasé sur le bloc 7 et/ou usiné dans le bloc 7 et/ou moulé dans le bloc 7 et/ou coulé dans le bloc 7.

De même, au moins une partie des échangeurs thermiques peut comprendre (notamment à la jonction entre deux éléments) une couche de dorure configurée pour augmenter l'échange thermique avec le plateau concerné.

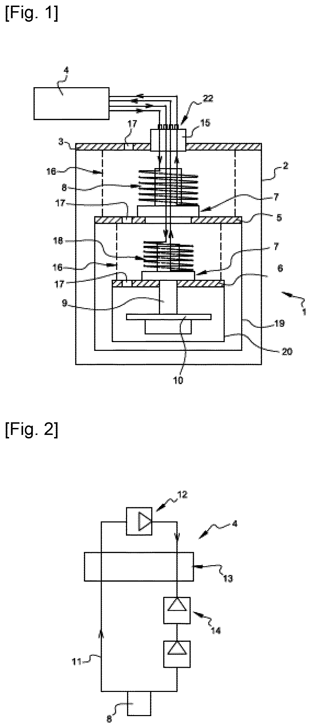

Comme illustré schématiquement à la [Fig. 2], le refroidisseur 4 cryogénique produisant la puissance froide (flux de fluide de cycle froid) peut comprendre un réfrigérateur cryogénique à cycle de réfrigération continu d'un fluide de cycle.

Un tel réfrigérateur comprend un circuit 11 de cycle composé des éléments suivants disposés en série: un mécanisme 12 de compression du fluide de cycle (un ou plusieurs compresseurs en série et/ou parallèle), au moins un organe 13 de refroidissement du fluide de cycle (échangeur(s) de chaleur), un mécanisme 14 de détente du fluide de cycle (une ou plusieurs turbine ou vanne(s) en série et/ou en parallèle) et au moins un organe 13 de réchauffage du fluide de cycle détendu (échangeur(s) notamment à contre-courant pour refroidir et réchauffer simultanément deux parties du circuit 11).

Le fluide de cycle comprend de préférence au moins l'un parmi: de l'hélium, de l'hydrogène, de l'azote, de l'argon.

Le circuit 11 de cycle est configuré pour soumettre le fluide de cycle à un cycle thermodynamique amenant le fluide de cycle à au moins une extrémité froide du circuit 11 de cycle à une température froide déterminée.

Le flux de fluide de cycle qui est mis en échange thermique avec lesdits plateaux 5, 6 dans l'ensemble d'échangeurs thermiques comprend au moins une fraction de ce fluide de cycle à la température froide. Par exemple, le fluide liquéfié refroidi qui circule dans les conduites 8, 18 est une portion prélevée sur le flux circulant dans le circuit 11 de cycle.

Le dispositif 1 comprend un ensemble de conduite(s) 8, 18 d'amenée du fluide du circuit 11 de cycle vers l'ensemble d'échangeur et de retour dudit fluide de l'ensemble d'échangeur vers le circuit 11 de cycle du réfrigérateur 4 (au travers du couvercle 3).

Le circuit 11 de cycle peut être configuré pour soumettre le fluide de cycle à un cycle thermodynamique amenant le fluide de cycle à plusieurs températures froides distinctes au niveau respectivement de plusieurs extrémités froides du circuit 11 de cycle.

Ainsi, plusieurs flux distincts du fluide de cycle auxdites températures froides distinctes peuvent être mis en échange thermique avec respectivement plusieurs plateaux 5, 6 distincts via des ensembles d'échangeurs thermiques respectifs (deux ou plus).

Dans l'exemple illustré, deux ensembles de conduites 8, 18 fournissent une puissance froide à des températures distinctes au niveau respectivement de deux plateaux 5, 6. Les deux ensembles forment des boucles de circulation distinctes du fluide de cycle qui viennent dans l'enceinte 2.

Le dispositif 1 comprend de préférence un ou des éléments 22 d'isolation électrique assurant une isolation électrique entre l'enceinte 2 et la source froide du refroidisseur 4 (notamment par rapport aux tensions électriques de la source froide du refroidisseur 4). Par exemple, des éléments 22 d'isolation sont interposés au niveau de la jonction entre les tubes ou conduites 8, 18 et la bride 15, et/ou dans une position intermédiaire le long de la portion de conduite entre la source froide du refroidisseur 4 et la bride 15. Ces éléments 22 peuvent être par exemple des manchons ou portions de tube 8 composés de céramique ou tout autre matériau approprié. Par exemple, une partie des tubes ou conduites 8, 18 intègrent une portion isolante électriquement de ce type.

Comme schématisé à la [Fig. 1], le dispositif peut comprendre en outre dans l'enceinte 2, connecté au plateau 6, un réfrigérateur sub-kelvin 9, par exemple un réfrigérateur à dilution ou un réfrigérateur JT (Joule-Thomson), en échange thermique avec ce au moins un plateau 10 pour atteindre des températures plus basses que 4K, notamment plus basses que 1K, et en particulier autour du milliKelvin.

Un tel réfrigérateur 9 à dilution utilise classiquement un mélange d'hélium 3 et d'hélium 4 dans un circuit de travail comprenant un bouilleur, une chambre de mélange et un organe de mise en circulation du flux d'hélium. Le refroidissement est obtenu au niveau de la chambre de mélange à partir de l'enthalpie de mélange lorsque l'hélium-3 est dilué dans l'hélium 4.

Par exemple, le dispositif de réfrigération possède un circuit de travail en boucle contenant un fluide de cycle comprenant un mélange d'hélium d'isotope 3 (3He) et d'hélium d'isotope 4 (4He). Le circuit de travail comprend, disposés en série et reliés fluidiquement via un premier ensemble de conduite(s), une chambre de mélange, un bouilleur et un organe de transfert du fluide. Le premier ensemble de conduite(s) est configuré pour transférer du fluide de cycle d'une sortie de la chambre de mélange à une entrée du bouilleur et d'une sortie du bouilleur à une entrée de l'organe de transfert. Le circuit de travail comprenant un deuxième ensemble de conduite(s) reliant une sortie de l'organe de transfert à une entrée de la chambre de mélange. Le circuit de travail comprend au moins une première portion d'échange de chaleur entre au moins une partie du premier ensemble de conduite(s) et le deuxième ensemble de conduite(s), cette première portion d'échange de chaleur étant située entre le bouilleur et la chambre de mélange. Un organe de refroidissement est généralement prévu en échange thermique avec le circuit de travail et configuré pour transférer des frigories au fluide de cycle.

Le dispositif 1 intègre ainsi un ensemble d'échangeurs thermiques dans l'enceinte 2 qui sont refroidis par une source froide externe apportant de la puissance froide jusqu'à 4K, voir jusqu'à 2K, en particulier via un flux de fluide cryogénique. Cette configuration permet d'apporter plus de puissance qu'un tube à gaz pulsé.

Le refroidissement peut éventuellement être accéléré en augmentant les débits de fluide(s) de cycle par rapport à un débit nominal. Lors des arrêts du dispositif, il suffit d'arrêter l'alimentation en fluide de cycle pour déconnecter la puissance froide. Ceci est plus aisé que les solutions humides connues.

Ainsi la structure selon l'invention permet de remplacer un tube à gaz pulsé par un ensemble d'échangeurs ayant les mêmes interfaces thermiques et mécaniques que dans le cas d'un tube à gaz pulsé.

Comme mentionné ci-dessus, les échangeurs thermiques peuvent être alimentés par exemple par un réfrigérateur ou liquéfacteur à hélium (boucle ouverte ou fermée), ou par de de l'azote liquide (boucle ouverte ou fermée reliée à un réservoir d'azote liquide) ou un autre fluide liquéfié.

L'ensemble échangeur(s) peut être installé dans n'importe quelle installation utilisant un tube à gaz pulsé. Ceci permet de modifier facilement des installations déjà existantes et utilisant des tubes à gaz pulsé.

L'invention peut permettre de s'affranchir de la rigidité d'un tube à gaz pulsé. Les échangeurs peuvent être disposés selon une direction horizontale, et/ou montés de manière non solidaires entre eux.

Comme évoqué ci-dessus, l'ensemble échangeurs thermiques peut avoir un ou plusieurs étages (par exemple un à une température de 4K environ, 20K environ, 50 à 70K, 80K...).

Ceci permet d'étager le besoin en puissance froide en fonction des températures et ainsi de limiter la puissance nécessaire au fonctionnement de l'installation. Plus le dispositif doit refroidir de d'échantillons, par exemple des Qbit, plus il est intéressant d'ajouter des étages de refroidissement de ce type. L'ensemble des échangeurs thermiques peut être alimenté (refroidis) par un ou plusieurs flux de fluide de cycle à des températures différentes. De même, un même flux de fluide de cycle peut alimenter plusieurs étages de refroidissement en série.

En particulier vers les températures autour de 4K, le fluide de cycle (typiquement l'hélium) peut être dans un état supercritique et sous refroidi pour limiter les vibrations résultantes de sa vaporisation lors de son réchauffement.

L'ensemble des échangeurs thermiques peut être inséré dans l'enceinte via un seul piquage sur la bride ou couvercle supérieur. Ceci permet de faciliter l'installation, d'optimiser l'espace expérimental dans l'enceinte.

L'ensemble d'échangeur(s) peut être intégré dans un volume ou vide séparé du reste de l'enceinte 2 pour limiter le risque de fuite de fluide de cycle dans l'enceinte 2.

L'interface thermique entre l'enceinte 2 et les échangeurs thermiques peut être réalisée en boulonnant l'échangeur contre une platine de l'étage ou plateau associé, et/ou à l'aide de tresses thermiques conductrices.

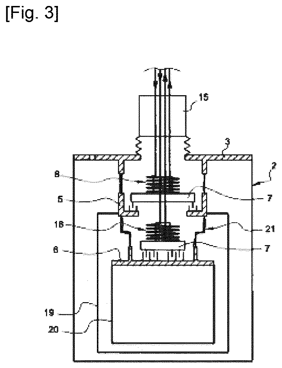

Comme illustré à la [Fig. 3], tout ou partie des échangeurs thermiques peuvent être en échange avec les plateaux 5, 6 uniquement par échange gazeux de type hélium, azote, argon ou hydrogène. Le dispositif 1 comprend alors de préférence un ou des échangeurs de chaleur disposés dans une gaine 21 étanche délimitant un volume de gaz indépendant du reste du volume de l'enceinte 2 et en échange avec lesdits plateaux 5, 6 via la conduction thermique du gaz présent dans la gaine.

Dans cet exemple, un échangeur à deux étages est intégré dans l'enceinte 2. Il permet par exemple d'alimenter un étage ou plateau avec une puissance froide à une température autour de 50-70K avec de l'hélium gazeux et un autre étage/plateau autour de 4K avec de l'hélium supercritique sous refroidi. L'hélium peut être alimenté par une ou des lignes multiples dont les écrans sont alimentés par le retour de l'hélium gazeux réchauffé. Le ou les échangeurs thermiques peuvent avoir toute autre structure appropriée. Cf. par exemple FR3065064A1.

## Revendications

1. Dispositif de réfrigération cryogénique comprenant une enceinte (2) délimitant un volume étanche sous vide refermé par un couvercle (3), le dispositif (1) comprenant au moins un refroidisseur (4) cryogénique monté au travers du couvercle (3) et ayant une première extrémité située à l'extérieur de l'enceinte (2) et une seconde extrémité située dans l'enceinte (2), le refroidisseur (4) cryogénique étant configuré pour fournir du froid au niveau de sa seconde extrémité, le dispositif (1) comprenant au moins deux plateaux (5, 6, 10) conducteurs thermiques répartis selon une direction de répartition dans l'enceinte (2) et formant des étages thermiques, au moins une partie des plateaux (5, 6, 10) étant refroidie par le refroidisseur (4) cryogénique à des températures déterminées respectives décroissantes dans la direction de répartition, le dispositif (1) comprenant un écran (19, 20) et un ensemble d'échangeurs thermiques, au moins un des plateaux (5, 6, 10) étant relié à ledit écran (19, 20) thermique formant un volume englobant au moins un plateau suivant, le refroidisseur (4) cryogénique étant du type utilisant une source froide de fluide de cycle liquéfié tel que de l'hélium ou de l'azote, **caractérisé en ce que** dans le dispositif (1) la puissance froide du refroidisseur (4) cryogénique est stockée et/ou produite au niveau de sa première extrémité, **en ce qu'** au moins une partie des plateaux (5, 6, 10) est refroidie par le fluide de cycle via un ensemble d'échangeurs thermiques en échange de chaleur avec lesdits plateaux (5, 6) et avec un flux du fluide de cycle transférant de la puissance froide de la première extrémité vers la seconde extrémité du refroidisseur (4) cryogénique.

2. Dispositif selon la revendication 1, **caractérisé en ce que** l'ensemble d'échangeurs thermiques en échange de chaleur avec lesdits plateaux (5, 6) comprend plusieurs échangeurs thermiques distincts associés respectivement aux plateaux (5, 6), les échangeurs (5, 6) d'au moins deux plateaux (5, 6) étant reliés mécaniquement les uns aux autres.

3. Dispositif selon la revendication 2, **caractérisé en ce que** lesdits échangeurs thermiques sont agencés et espacés selon la direction de répartition, la direction de répartition étant verticale en position de fonctionnement dans l'enceinte (2).

4. Dispositif selon la revendication 2 ou 3, **caractérisé en ce que** lesdits échangeurs thermiques sont montés dans l'enceinte (2) via un même passage dans le couvercle (3), par exemple via une même bride (15) support du couvercle (3).

5. Dispositif selon l'une quelconque des revendications 1 à 4, **caractérisé en ce que** les échangeurs thermiques comprennent un bloc (7) de matériau conducteur thermique, par exemple en cuivre, en contact avec un tube (8, 18) de matériau conducteur thermique, par exemple en cuivre, transportant le flux de fluide de cycle, ledit tube (8, 18) étant brasé sur le bloc (7) et/ou usiné dans le bloc (7) et/ou moulé et/ou coulé dans le bloc (7).

6. Dispositif selon l'une quelconque des revendications 1 à 5, **caractérisé en ce qu'**au moins une partie des échangeurs thermiques sont montés sur les plateaux (5, 6) et en échange de chaleur avec lesdits plateaux (5, 6) par conduction et contact, via au moins l'un parmi : un boulonnage, au moins une tresse thermique de liaison, une pince.

7. Dispositif selon l'une quelconque des revendications 1 à 6, **caractérisé en ce qu'**au moins une partie de l'ensemble d'échangeurs thermiques est disposé dans une gaine (21) étanche délimitant un volume indépendant du reste du volume de l'enceinte (2).

8. Dispositif selon la revendication 7, **caractérisé en ce que** qu'au moins une partie des échangeurs thermiques sont en échange de chaleur avec lesdits plateaux (5, 6) sans contact avec les plateaux mais via un gaz intermédiaire, par exemple un gaz contenant au moins l'un parmi : de l'hélium, de l'azote, de l'argon ou de l'hydrogène.

9. Dispositif selon l'une quelconque des revendications 1 à 8, **caractérisé en ce que** qu'au moins une partie des échangeurs thermiques comprend une couche de dorure configurée pour augmenter l'échange thermique.

10. Dispositif selon l'une quelconque des revendications 1 à 9, **caractérisé en ce que** le refroidisseur (4) cryogénique comprend un réfrigérateur à cycle de réfrigération d'un fluide de cycle, ledit réfrigérateur comprenant, un circuit (11) de cycle composé des éléments suivants disposés en série: un mécanisme (12) de compression du fluide de cycle, au moins un organe (13) de refroidissement du fluide de cycle, un mécanisme (14) de détente du fluide de cycle et au moins un organe (13) de réchauffage du fluide de cycle détendu, dans lequel le fluide de cycle comprenant au moins l'un parmi : de l'hélium, de l'hydrogène, de l'azote de l'argon et **en ce que** le circuit (11) de cycle est configuré pour soumettre le fluide de cycle à un cycle thermodynamique amenant le fluide de cycle à au moins une extrémité du circuit (11) de cycle à une température froide déterminée, et **en ce que** le flux de fluide de cycle en échange thermique avec lesdits plateaux (5, 6) dans l'ensemble d'échangeurs thermiques comprend le fluide de cycle à la température froide, le dispositif comprenant un ensemble de conduite(s) (8, 18) d'amenée d'au moins une partie du fluide du circuit (11) de cycle vers l'ensemble d'échangeur et de retour dudit fluide de l'ensemble d'échangeur vers le circuit (11) de cycle du réfrigérateur (4).

11. Dispositif selon la revendication 10, **caractérisé en ce que** le circuit (11) de cycle est configuré pour soumettre le fluide de cycle à un cycle thermodynamique amenant le fluide de cycle à plusieurs températures froides distinctes au niveau respectivement de plusieurs extrémités du circuit (11) de cycle et **en ce que** plusieurs flux distincts du fluide de cycle auxdites températures froides distinctes sont mis en échange thermique avec respectivement les aux moins deux plateaux (5, 6) distincts via deux ensembles d'échangeurs thermiques respectifs.

12. Dispositif selon la revendication 10 ou 11, **caractérisé en ce que** le fluide de cycle est ou contient majoritairement de l'hélium, le circuit (11) de cycle étant configuré pour amener le fluide de cycle à au moins une température froide parmi : 80K environ, entre 20 et 70K, entre 2K et5K et/ou dans un état supercritique.

13. Dispositif selon l'une quelconque des revendications 1 à 12, **caractérisé en ce que** le refroidisseur (4) cryogénique comprend une réserve de gaz cryogénique liquéfié, par exemple de l'azote liquide, et un ensemble de conduite(s) (8, 18) d'amenée de gaz cryogénique liquéfié de la réserve vers l'ensemble d'échangeur.

14. Dispositif selon l'une quelconque des revendications 1 à 13, **caractérisé en ce qu'**il comprend un réfrigérateur (9) à dilution en échange thermique avec au moins un plateau (5, 6, 10).

15. Procédé de réfrigération cryogénique d'échantillon(s) utilisant un dispositif de réfrigération cryogénique selon l'une quelconque des revendications 1 à 14, comprenant une étape de stockage et/ou de production d'une source froide de fluide de cycle liquéfié tel que de l'hélium ou de l'azote au niveau de la première extrémité du refroidisseur (4) cryogénique, une étape de transfert d'un flux de ce fluide de cycle de la première extrémité vers la seconde extrémité du refroidisseur (4) cryogénique, ledit flux de fluide de cycle étant mis en échange de chaleur avec l'ensemble d'échangeurs thermique au niveau de la seconde extrémité de façon étanche sans communiquer avec le volume gazeux interne de l'enceinte (2).

## Patentansprüche

1. Kryogene Kühlvorrichtung, beinhaltend ein Gehäuse (2), das ein abgedichtetes Volumen unter Vakuum begrenzt, das durch einen Deckel (3) verschlossen ist, wobei die Vorrichtung (1) mindestens einen kryogenen Kühler (4) beinhaltet, der durch den Deckel (3) hindurch montiert ist und ein erstes Ende, das sich außerhalb des Gehäuses (2) befindet, und ein zweites Ende, das sich in dem Gehäuse (2) befindet, aufweist, wobei der kryogene Kühler (4) dazu konfiguriert ist, an seinem zweiten Ende Kälte bereitzustellen, wobei die Vorrichtung (1) mindestens zwei wärmeleitende Platten (5, 6, 10) beinhaltet, die entlang einer Verteilungsrichtung in dem Gehäuse (2) verteilt sind und Wärmestufen bilden, wobei mindestens ein Teil der Platten (5, 6, 10) durch den kryogenen Kühler (4) auf jeweilige bestimmte Temperaturen, die in der Verteilungsrichtung abnehmen, gekühlt wird, wobei die Vorrichtung (1) eine Abschirmung (19, 20) und einen Satz Wärmetauscher beinhaltet, wobei mindestens eine der Platten (5, 6, 10) mit der Wärmeabschirmung (19, 20) verbunden ist, die ein Volumen bildet, das mindestens eine nachfolgende Platte einschließt, wobei der kryogene Kühler (4) von dem Typ ist, der eine Kältequelle eines verflüssigten Kreislauffluids, wie etwa Helium oder Stickstoff, verwendet, **dadurch gekennzeichnet, dass** in der Vorrichtung (1) die Kälteleistung des kryogenen Kühlers (4) an seinem ersten Ende gespeichert und/oder produziert wird, dass mindestens ein Teil der Platten (5, 6, 10) über einen Satz Wärmetauscher in Wärmeaustausch mit den Platten (5, 6) durch das Kreislauffluid gekühlt wird und wobei ein Strom des Kreislauffluids Kälteleistung von dem ersten Ende zu dem zweiten Ende des kryogenen Kühlers (4) überträgt.

2. Vorrichtung nach Anspruch 1, **dadurch gekennzeichnet, dass** der Satz Wärmetauscher in Wärmeaustausch mit den Platten (5, 6) mehrere unterschiedliche Wärmetauscher beinhaltet, die jeweils mit den Platten (5, 6) assoziiert sind, wobei die Tauscher (5, 6) von mindestens zwei Platten (5, 6) mechanisch miteinander verbunden sind.

3. Vorrichtung nach Anspruch 2, **dadurch gekennzeichnet, dass** die Wärmetauscher entlang der Verteilungsrichtung angeordnet und beabstandet sind, wobei die Verteilungsrichtung in der Betriebsstellung in dem Gehäuse (2) vertikal ist.

4. Vorrichtung nach Anspruch 2 oder 3, **dadurch gekennzeichnet, dass** die Wärmetauscher über einen gleichen Durchgang in dem Deckel (3), beispielsweise über einen gleichen Stützflansch (15) des Deckels (3), in dem Gehäuse (2) montiert sind.

5. Vorrichtung nach einem der Ansprüche 1 bis 4, **dadurch gekennzeichnet, dass** die Wärmetauscher einen Block (7) aus wärmeleitendem Material, beispielsweise aus Kupfer, in Kontakt mit einem Rohr (8, 18) aus wärmeleitendem Material, beispielsweise aus Kupfer, das den Kreislauffluidstrom transportiert, beinhalten, wobei das Rohr (8, 18) an den Block (7) angelötet und/oder in den Block (7) eingearbeitet und/oder in den Block (7) eingeformt und/oder eingegossen ist.

6. Vorrichtung nach einem der Ansprüche 1 bis 5, **dadurch gekennzeichnet, dass** mindestens ein Teil der Wärmetauscher durch mindestens eines von Folgendem auf den Platten (5, 6) montiert ist und mit den Platten (5, 6) durch Konduktion und Kontakt in Wärmeaustausch steht: eine Verschraubung, mindestens eine Wärmeverbindungslitze, eine Klemme.

7. Vorrichtung nach einem der Ansprüche 1 bis 6, **dadurch gekennzeichnet, dass** mindestens ein Teil des Satzes Wärmetauscher in einer dichten Umhüllung (21) angeordnet ist, die ein vom Rest des Volumens des Gehäuses (2) unabhängiges Volumen begrenzt.

8. Vorrichtung nach Anspruch 7, **dadurch gekennzeichnet, dass** mindestens ein Teil der Wärmetauscher nicht durch Kontakt mit den Platten, sondern über ein Zwischengas in Wärmeaustausch mit den Platten (5, 6) steht, beispielsweise ein Gas, das mindestens eines von Folgendem enthält: Helium, Stickstoff, Argon oder Wasserstoff.

9. Vorrichtung nach einem der Ansprüche 1 bis 8, **dadurch gekennzeichnet, dass** mindestens ein Teil der Wärmetauscher eine Vergoldungsschicht beinhaltet, die dazu konfiguriert ist, den Wärmeaustausch zu erhöhen.

10. Vorrichtung nach einem der Ansprüche 1 bis 9, **dadurch gekennzeichnet, dass** der kryogene Kühler (4) einen Kreislaufkühler zur Kühlung eines Kreislauffluids beinhaltet, wobei der Kühler einen Kreislaufkreis (11) beinhaltet, der aus den folgenden in Reihe angeordneten Elementen besteht: einem Mechanismus (12) zur Verdichtung des Kreislauffluids, mindestens einem Organ (13) zur Kühlung des Kreislauffluids, einem Mechanismus (14) zur Entspannung des Kreislauffluids und mindestens einem Organ (13) zur Erwärmung des entspannten Kreislauffluids, wobei das Kreislauffluid mindestens eines von Folgendem beinhaltet: Helium, Wasserstoff, Stickstoff, Argon, und dass der Kreislaufkreis (11) dazu konfiguriert ist, das Kreislauffluid einem thermodynamischen Kreislauf zu unterziehen, der das Kreislauffluid an mindestens einem Ende des Kreislaufkreises (11) auf eine bestimmte kalte Temperatur bringt, und dass der Kreislauffluidstrom in Wärmeaustausch mit den Platten (5, 6) in dem Satz Wärmetauscher das Kreislauffluid mit der kalten Temperatur beinhaltet, wobei die Vorrichtung einen Satz einer oder mehrerer Leitungen (8, 18) zum Leiten mindestens eines Teils des Fluids des Kreislaufkreises (11) zu dem Satz Tauscher und zum Zurückleiten des Fluids von dem Satz Tauscher zu dem Kreislaufkreis (11) des Kühlers (4) beinhaltet.

11. Vorrichtung nach Anspruch 10, **dadurch gekennzeichnet, dass** der Kreislaufkreis (11) dazu konfiguriert ist, das Kreislauffluid einem thermodynamischen Kreislauf zu unterziehen, der das Kreislauffluid an jeweils mehreren Enden des Kreislaufkreises (11) auf mehrere unterschiedliche kalte Temperaturen bringt, und dass mehrere unterschiedliche Ströme des Kreislauffluids mit den unterschiedlichen kalten Temperaturen über zwei jeweilige Sätze Wärmetauscher mit den jeweils mindestens zwei unterschiedlichen Platten (5, 6) in Wärmeaustausch gebracht werden.

12. Vorrichtung nach Anspruch 10 oder 11, **dadurch gekennzeichnet, dass** das Kreislauffluid Helium ist oder dieses überwiegend enthält, wobei der Kreislaufkreis (11) dazu konfiguriert ist, das Kreislauffluid auf mindestens eine kalte Temperatur von Folgenden zu bringen: ungefähr **80 K,** zwischen 20 und 70 **K,** zwischen 2 K und 5 K und/oder in einen überkritischen Zustand.

13. Vorrichtung nach einem der Ansprüche 1 bis 12, **dadurch gekennzeichnet, dass** der kryogene Kühler (4) eine Reserve an verflüssigtem Kryogas, beispielsweise flüssigem Stickstoff, und einen Satz einer oder mehrerer Leitungen (8, 18) zum Leiten von verflüssigtem Kryogas von der Reserve zu dem Satz Tauscher beinhaltet.

14. Vorrichtung nach einem der Ansprüche 1 bis 13, **dadurch gekennzeichnet, dass** sie einen Verdünnungskühler (9) in Wärmeaustausch mit mindestens einer Platte (5, 6, 10) beinhaltet.

15. Verfahren zur kryogenen Kühlung einer oder mehrerer Proben unter Verwendung einer kryogenen Kühlvorrichtung nach einem der Ansprüche 1 bis 14, beinhaltend einen Schritt des Speicherns und/oder des Produzierens einer Kältequelle eines verflüssigten Kreislauffluids, wie etwa Helium oder Stickstoff, an dem ersten Ende des kryogenen Kühlers (4), einen Schritt des Übertragens eines Stroms dieses Kreislauffluids von dem ersten Ende zu dem zweiten Ende des kryogenen Kühlers (4), wobei der Kreislauffluidstrom an dem zweiten Ende auf dichte Weise, ohne mit dem internen Gasvolumen des Gehäuses (2) zu kommunizieren, mit dem Satz Wärmetauscher in Wärmeaustausch gebracht wird.

## Claims

1. Cryogenic refrigeration device comprising an enclosure (2) delimiting a vacuum-sealed volume closed by a cover (3), the device (1) comprising at least one cryogenic cooler (4) mounted through the cover (3) and having a first end located outside the enclosure (2) and a second end located inside the enclosure (2), the cryogenic cooler (4) being configured to supply cold at its second end, the device (1) comprising at least two thermally conductive plates (5, 6, 10) distributed in a distribution direction in the enclosure (2) and forming thermal stages, at least some of the plates (5, 6, 10) being cooled by the cryogenic cooler (4) to respective determined temperatures which decrease in the distribution direction, the device (1) comprising a shield (19, 20) and a set of heat exchangers, at least one of the plates (5, 6, 10) being connected to said thermal shield (19, 20) forming a volume which encloses at least one following plate, the cryogenic cooler (4) being of the type which uses a cold source of liquefied cycle fluid such as helium or nitrogen, **characterized in that** in the device (1) the cooling power of the cryogenic cooler (4) is stored and/or produced at its first end, **in that** at least some of the plates (5, 6, 10) are cooled by the cycle fluid via a set of heat exchangers in heat exchange with said plates (5, 6) and with a flow of the cycle fluid which transfers cooling power from the first end to the second end of the cryogenic cooler (4).

2. Device according to Claim 1, **characterized in that** the set of heat exchangers in heat exchange with said plates (5, 6) comprises a plurality of separate heat exchangers respectively associated with the plates (5, 6), the exchangers (5, 6) of at least two plates (5, 6) being mechanically connected to one another.

3. Device according to Claim 2, **characterized in that** said heat exchangers are arranged and spaced apart in the distribution direction, the distribution direction being vertical in the operating position in the enclosure (2).

4. Device according to Claim 2 or 3, **characterized in that** said heat exchangers are mounted in the enclosure (2) via one and the same passage in the cover (3), for example via one and the same support flange (15) of the cover (3).

5. Device according to any one of Claims 1 to 4, **characterized in that** the heat exchangers comprise a block (7) of thermally conductive material, for example made of copper, in contact with a tube (8, 18) of thermally conductive material, for example made of copper, transporting the cycle fluid flow, said tube (8, 18) being soldered to the block (7) and/or machined in the block (7) and/or moulded and/or cast in the block (7).

6. Device according to any one of Claims 1 to 5, **characterized in that** at least some of the heat exchangers are mounted on the plates (5, 6) and in heat exchange with said plates (5, 6) by conduction and contact, via at least one of the following: bolting, at least one thermal connecting braid, a clamp.

7. Device according to any one of Claims 1 to 6, **characterized in that** at least some of the set of heat exchangers are arranged in a sealed casing (21) delimiting a volume that is independent of the rest of the volume of the enclosure (2).

8. Device according to Claim 7, **characterized in that** at least some of the heat exchangers are in heat exchange with said plates (5, 6) without contact with the plates but via an intermediate gas, for example a gas containing at least one of the following: helium, nitrogen, argon or hydrogen.

9. Device according to any one of Claims 1 to 8, **characterized in that** at least some of the heat exchangers comprise a layer of gilt configured to increase the heat exchange.

10. Device according to any one of Claims 1 to 9, **characterized in that** the cryogenic cooler (4) comprises a refrigerator having a refrigeration cycle for a cycle fluid, said refrigerator comprising a cycle circuit (11) composed of the following elements arranged in series: a mechanism (12) for compressing the cycle fluid, at least one member (13) for cooling the cycle fluid, a mechanism (14) for expanding the cycle fluid, and at least one member (13) for reheating the expanded cycle fluid, wherein the cycle fluid comprises at least one of the following: helium, hydrogen, nitrogen, argon, and **in that** the cycle circuit (11) is configured to subject the cycle fluid to a thermodynamic cycle which brings the cycle fluid at at least one end of the cycle circuit (11) to a determined cold temperature, and **in that** the cycle fluid flow in heat exchange with said plates (5, 6) in the set of heat exchangers comprises the cycle fluid at the cold temperature, the device comprising a set of pipe(s) (8, 18) for supplying at least some of the fluid from the cycle circuit (11) to the set of exchangers and for returning said fluid from the set of exchangers to the cycle circuit (11) of the refrigerator (4).

11. Device according to Claim 10, **characterized in that** the cycle circuit (11) is configured to subject the cycle fluid to a thermodynamic cycle which brings the cycle fluid to a plurality of different cold temperatures at, respectively, a plurality of ends of the cycle circuit (11), and **in that** a plurality of separate flows of the cycle fluid at said different cold temperatures are placed in heat exchange with, respectively, the at least two separate plates (5, 6) via two respective sets of heat exchangers.

12. Device according to Claim 10 or 11, **characterized in that** the cycle fluid is or contains predominantly helium, the cycle circuit (11) being configured to bring the cycle fluid to at least one of the following cold temperatures: approximately 80 K, between 20 and 70 K, between 2 K and 5 K, and/or into a supercritical state.

13. Device according to any one of Claims 1 to 12, **characterized in that** the cryogenic cooler (4) comprises a reserve of liquefied cryogenic gas, for example of liquid nitrogen, and a set of pipe(s) (8, 18) for supplying liquefied cryogenic gas from the reserve to the set of exchangers.

14. Device according to any one of Claims 1 to 13, **characterized in that** it comprises a dilution refrigerator (9) in heat exchange with at least one plate (5, 6, 10).

15. Method for cryogenic refrigeration of sample(s) using a cryogenic refrigeration device according to any one of Claims 1 to 14, comprising a step of storing and/or producing a cold source of liquefied cycle fluid such as helium or nitrogen at the first end of the cryogenic cooler (4), a step of transferring a flow of this cycle fluid from the first end to the second end of the cryogenic cooler (4), said flow of cycle fluid being placed in heat exchange with the set of heat exchangers at the second end in a sealed manner without communicating with the internal gas volume of the enclosure (2).
